# EUROPEAN PATENT APPLICATION

(11) **EP 2 735 980 A1**
(43) Date of publication of application: **28.05.2014**
(21) Application number: 13183047.3
(22) Date of filing: 04.09.2013
(51) Int. Cl.: G06F 17/30

(54) **Web searching method, system, and apparatus**

(30) Priority: 21.11.2012 TW 101143516
(71) Applicant: Hon Hai Precision Industry Co., Ltd., New Taipei City (TW)
(72) Inventor: Lee, Chung-I, New Taipei (TW); Yeh, Chien-Fa, New Taipei (TW); Lu, Gen-Chi, New Taipei (TW); Liu, Yue-Cen, New Taipei (TW)
(74) Representative: Gray, John James

(57) **Abstract**

In a method for web searching, basic features of the reference picture are analyzed, and similarities between the reference picture and the pictures in a picture database is computed (S02). Pictures from the picture database are selected according to similarities found (S03), then web pages which contain the selected pictures are retrieved (S04) to find locations of the selected pictures in the web pages and obtain textual content around the selected pictures (S05). Weightings of words and phrases in the textual content in each of the web pages are computed (S06) to select one or more of the words and phrases (S08). The selected words and phrases are inputted into the search engine and the search result is displayed to the user (S09).

## Description

### Field

Embodiments of the present disclosure relate to query processing, and more specifically relates to techniques for searching web pages.

### BackGround

People seek information from the Internet using a web browser. A person begins his/her search for information by pointing his/her web browser at a website associated with a search engine. The search engine allows a user to request web pages containing information related to a particular search word or phrase.

Although the search words and phrases may be used by the search engine to guide the search, finding target web pages being sought from hundreds or even thousands of web pages by users is challenging.

### Summary

According to one aspect of the disclosure, a web searching method is provided. The web searching method includes obtaining a picture from a search engine currently inputted from a client device; analyzing basic features of the received picture, and computing similarities between the received picture and pictures in a picture database according to the basic features; selecting pictures from the picture database according to the similarities; finding web pages which contains the selected pictures, finding locations of the selected pictures in the web pages, and obtaining textual content around the selected pictures in the web pages; computing weightings of words and phrases in the textual content in each of the web pages, and selecting one or more of the words and phrases according to the weightings of the words and phrases; and inputting the selected words and phrases into the search engine, receiving a search result accordingly, and displaying the search result on the client device.

### BRIEF DESCRIPTION OF THE DRAWINGS

Embodiments of the invention are described, by way of example only, with reference to the accompanying drawings, in which:

FIG. 1 is a block diagram of one embodiment of a network environment for executing web searching method.

FIG. 2 is a block diagram of one embodiment of an apparatus that executes the web searching method.

FIG. 3 illustrates a flowchart of one embodiment of the web searching method.

### DETAILED DESCRIPTION

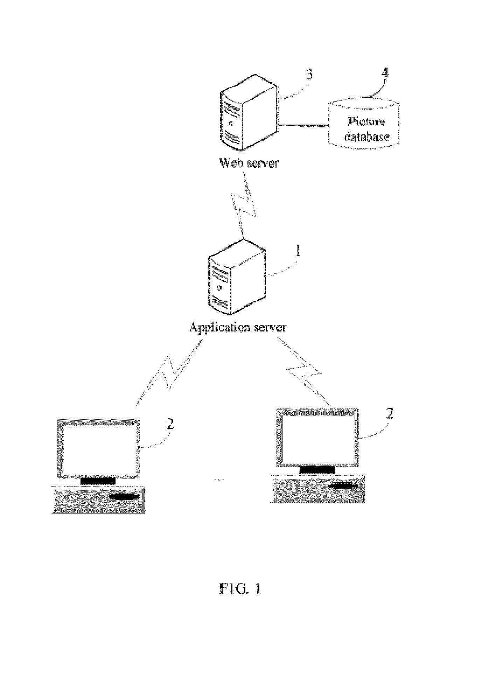

FIG. 1 is a block diagram of one embodiment of a network environment for executing web searching method. The network environment is constituted by an application server 1, a plurality of client devices 2, a web server 3, and a picture database 4. The applicant server 1 is an apparatus that executes a web searching method. The web server 3 provides web pages in response to requests of the client devices 2, using the Hypertext Transfer Protocol (HTTP). In another embodiment, the web server 3 can be used as the apparatus for executing the web searching method, thus the network environment also can be constituted only by the plurality of client devices 2, the web server 3, and the picture database 4.

The client devices 2 may include, but are not limited to, smart phones, personal digital assistants (PDA), notebooks, and desktops. Each of the client devices 2 includes a web browser which can be pointed at a website associated with a search engine to request web pages containing information related to search items inputted by a user. The search items may be words, phrases and pictures. In the present embodiment, the search items are pictures.

The picture database 4 is an organized collection of embedded pictures in web pages which can be distributed by the web server 3. Each of the pictures in the picture database 4 has related information, including a web site of the web page containing the picture, and a location of the picture in the web page.

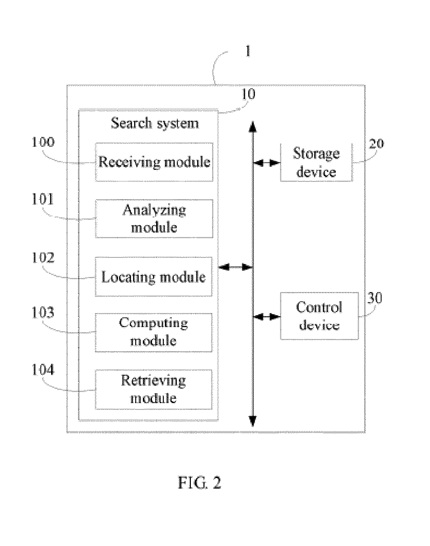

FIG. 2 is a block diagram of one embodiment of the application server 1, which is the apparatus that executes the web searching method. In one embodiment, the application server 1 includes a search system 10, a storage device 20, and a control device 30. The application server 1 may be configured in numbers of other ways and may include other or different components.

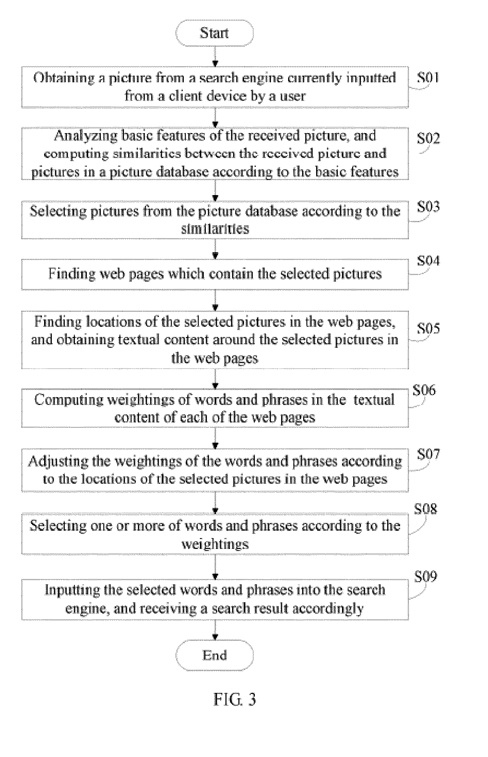

The search system 10 includes a plurality of function modules, such as a receiving module 100, an analyzing module 101, a locating module 102, a computing module 103, and a retrieving module 104. The function modules 100-104 may include computerized codes in the form of one or more programs, which provide at least the functions needed to execute the steps illustrated in FIG. 3.

The storage device 20 may include some type(s) of non-transitory computer-readable storage medium, such as a hard disk drive, a compact disc, a digital video disc, or a tape drive. The storage device 20 stores the computerized codes of the function modules of the search system 10.

The control device 30 may be a processor, an application-specific integrated circuit (ASIC), or a field programmable gate array, (FPGA) for example. The control device 30 may execute the computerized codes of the function modules of the search system 10 to realize the functions of the search system 10.

FIG. 3 illustrates a flowchart of one embodiment of the web searching method. The method is executed by at least one processor of an electronic device, for example, the control device 30 of the application server 1. Depending on the embodiment, additional steps in FIG. 3 may be added, others removed, and the ordering of the steps may be changed.

In step S01, the receiving module 100 obtains a picture from a search engine of one of the client devices 2 currently inputted from a client device by a user. In one embodiment, when a user A opens a website associated with a search engine using the client device 2, and inputs a picture into the search engine, the receiving module 100 obtains the picture from the search engine.

In step S02, the analyzing module 101 analyzes basic features of the received picture, and computes similarities between the received picture and any picture in the picture database according to the basic features. The basic features of the received picture include, but are not limited to, colors, an outline, and a shape of the received picture. In one embodiment, the analyzing module 101 uses a Scale Invariant Feature Transform (SIFT) method to analyze the basic features of the received picture.

In step S03, the analyzing module 101 selects pictures from the picture database according to the similarities. In one embodiment, the analyzing module 101 selects the pictures which have high similarities with the received picture from the picture database.

In step S04, the locating module 102 finds web pages which contain the selected pictures. As mentioned above, the picture database 4 stores the pictures, and also stores related information of the pictures, including web sites of the web pages containing the pictures, and a location of the picture in the web pages. Thus, the locating module 102 finds the web pages containing the selected pictures according to the web sites.

In step S05, the locating module 102 finds locations of the selected pictures in the web pages, and obtains textual content around the selected pictures in the web pages. The locating module 102 finds the locations of the selected pictures according to the related information of the selected pictures that are stored in the picture database 4.

In step S06, the computing module 103 computes weightings of words and phrases in the textual content in each of the web pages. The words include, for example, "computer," "network," and so on, the phrases include, for example "computer network," "authorized user" and others. In one embodiment, the weighting of each of the words and phrases is computed using a weighting algorithm, such as a term frequency-inverse document frequency (tf-idf) algorithm. The tf-idf algorithm is a numerical statistic which reflects how important a word and phrase is to a document in a collection or corpus. The tf-idf value increases proportionally to the number of times a word or phrase appears in the document, but is offset by the frequency of the word or the phrase in the corpus, which alleviates the fact that some words or phrase are used more commonly. For example, when a number of words and phrases appearing in a single web page is 100, and a word "computer" appears 3 times in this single web page, then the term frequency (tf) value of the word "computer" in the webpage is 3/100, namely 0.03. However, when the word "computer" appears in 1,000 web pages, and a number of total web pages is 10,000,000, then the inverse document frequency (idf) of the word "computer" is log (10,000,000/1,000), namely 4. Thus, the weighting of the word "computer" in the total web pages is 0.03*4, namely 0.12.

In step S07, the computing module 103 adjusts the weightings of the words and phrases according to the locations of the selected pictures in the web pages. In one embodiment, if a selected picture appears in the first page of a web page, it can be deemed that the selected picture is important, thus the computing module 103 may adjust the weightings of the words and phrases in the textual content around this selected picture by multiplying with a coefficient of 1.1. Step S07 may be omitted in another embodiment.

In step S08, the retrieving module 104 selects one or more of the words and phrases according to the weightings of the words and phrases.

In step S09, the retrieving module 104 inputs the selected words and phrases into the search engine, receives a search result accordingly, and displays the search result on the client device 1.

While specific embodiments of the invention have been described above, it is to be understood that the embodiments described herein can be implemented in hardware, software, firmware, middleware, microcode, or any combination thereof. For example, the invention may take the form of a computer program containing one or more sequences of machine-readable instructions which, when executed by a computer, causes the computer to perform one or more method described above.

When the embodiments are implemented in software, firmware, middleware or microcode, program code or code segments, they can be stored in a machine-readable medium, such as a storage component. The term "machine-readable medium" can include, without being limited to, wireless channels and various other media capable of storing, containing, and/or carrying instruction(s) and/or data. A code segment can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, etc. can be passed, forwarded, or transmitted using any suitable means including memory sharing, message passing, token passing, network transmission, etc. For a software implementation, the techniques described herein can be implemented with modules (e.g., procedures, functions, and so on) that perform the functions described herein. The software codes can be stored in memory units and executed by processors. The memory unit can be implemented within the processor or external to the processor, in which case it can be communicatively coupled to the processor via various means as is known in the art.

For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. All of the processes described above may be embodied in, and fully automated via, functional code modules executed by one or more general purpose electronic devices or processors. The code modules may be stored in any type of non-transitory machine-readable medium or other storage device. Some or all of the methods may alternatively be embodied in specialized hardware. Depending on the embodiment, the non-transitory machine-readable medium may be a hard disk drive, a compact disc, a digital video disc, a tape drive or other suitable storage medium.

It should be emphasized that the above-described embodiments of the present disclosure, particularly, any embodiments, are merely possible examples of implementations, merely set forth for a clear understanding of the principles of the disclosure. Many variations and modifications may be made to the above-described embodiment(s) of the disclosure without departing substantially from the spirit and principles of the disclosure. All such modifications and variations are intended to be included herein within the scope of this disclosure and the present disclosure and protected by the following claims.

## Claims

1. A web searching method, the method being executed by at least one processor of an electronic device, the method comprising:
obtaining a picture from a search engine currently inputted from a client device;
analyzing basic features of the received picture, and computing similarities between the received picture and pictures in a picture database according to the basic features;
selecting pictures from the picture database according to the similarities;
finding web pages which contains the selected pictures, finding locations of the selected pictures in the web pages, and obtaining textual content around the selected pictures in the web pages;
computing weightings of words and phrases in the textual content in each of the web pages, and selecting one or more of the words and phrases according to the weightings of the words and phrases; and
inputting the selected words and phrases into the search engine, receiving a search result accordingly, and displaying the search result on the client device.

2. The method according to claim 1, wherein the basic features of the received picture comprise colors, an outline, and a shape of the received picture.

3. The method according to claim 1 or 2, wherein the picture database stores pictures in web pages provided by a web server, each of the pictures comprising a web site of a web page containing the picture, and a location of the picture in the web page.

4. The method according to claim 1, 2 or 3, wherein the weighting of each of the words and phrases is computed using a term frequency-inverse document frequency (tf-idf) algorithm.

5. The method according to any preceding claim, wherein the basic features of the received picture is analyzed using a Scale Invariant Feature Transform (SIFT) method.

6. The method according to any preceding claim, further comprising:
adjusting the weightings of the words and phrases according to the locations of the selected pictures in the web pages.

7. An apparatus that executes a web searching method, comprising:
a control device; and
a storage device storing one or more programs which when executed by the control device, causes the processing device to:
obtain a picture from a search engine currently inputted from a client device;
analyze basic features of the received picture, and compute similarities between the received picture and pictures in a picture database according to the basic features;
select pictures from the picture database according to the similarities;
find web pages which contains the selected pictures, find locations of the selected pictures in the web pages, and obtain textual content around the selected pictures in the web pages;
compute weightings of words and phrases in the textual content in each of the web pages, and select one or more of the words and phrases according to the weightings of the words and phrases; and
input the selected words and phrases into the search engine, receive a search result accordingly, and display the search result on the client device.

8. The apparatus according to claim 7, wherein the basic features of the received picture comprise colors, an outline, and a shape of the received picture.

9. The apparatus according to claim 7 or 8, wherein the picture database stores pictures in web pages provided by a web server, each of the pictures comprising a web site of a web page containing the picture, and a location of the picture in the web page.

10. The apparatus according to claim 7, 8 or 9, wherein the weighting of each of the words and phrases is computed using a term frequency-inverse document frequency (tf-idf) algorithm.

11. The apparatus according to any of claims 7 to 10, wherein the basic features of the received picture is analyzed using a Scale Invariant Feature Transform (SIFT) method.

12. The apparatus according to any of claims 7 to 11, wherein the processing device is further to
adjust the weightings of the words and phrases according to the locations of the selected pictures in the web pages.

13. A storage medium having stored thereon instructions that, when executed by a processor of an electronic device, causes the processor to perform a web searching method as claimed in any of claims 1 to 6.
